# EUROPEAN PATENT APPLICATION

(11) **EP 1 445 157 A1**
(43) Date of publication of application: **11.08.2004**
(21) Application number: 03761369.2
(22) Date of filing: 04.06.2003
(51) Int. Cl.: B60R 21/26

(54) **SAFETY DEVICE CONSISTING OF A RUPTURE DISC WITH MULTIPLE ADJUSTMENT PRESSURE**

(30) Priority: 03.10.2002 ES 200202365 U
(71) Applicant: Talleres Mecanicos Mafra S.L., 48960 Galdakao-Vizcaya (ES)
(72) Inventor: CENTELLES MOTA, Gonzalo, 48960 Galdacano (ES)
(74) Representative: Del Valle Valiente, Juan Carlos
(86) International application number: PCT/ES2003/000269
(87) International publication number: WO 2004/031001

(57) **Abstract**

Safety device using a rupture disc with multiple pressure settings which consists of a metal body (2) formed by a pressurized vessel that has a rupture disc (12) supported on a hold-down device (4), which has an appropriate gas outlet diameter (6) and is totally hermetic, incorporating a ring element (13) welded to the rupture disc (7), and having a complementary outlet orifice (14).

## Description

### OBJECT OF THE INVENTION

These specifications refer to a Utility Model application corresponding to a safety device using a rupture disc with multiple pressure settings, whose evident purpose lies in acting as a safety device of application in equipment subjected to pressure, with several trip pressures for the safety element in case of overpressure, using a single rupture disc.

### FIELD OF THE INVENTION

This invention is applicable in containers or tanks that need an operating pressure for their safety element under storage or idle conditions, and in which this operating pressure varies when there is some type of stress; and also where the fluid contained in the vessels or tanks changes or is mixed in different concentrations, in such a way that the properties of the final mix vary, such as containers or tanks exposed to temperatures that fluctuate greatly, and whose level of fullness is variable depending on use conditions that make this necessary.

The invention is also applicable in containers or tanks whose internal volume is variable, because it is not a static system or because the properties of the material change; or because it is reinforced or weakened when some element of its structure is modified.

### BACKGROUND OF THE INVENTION

In known applications, the means used to enable a container to have more than one trip pressure for the safety element consist of having several dependent rupture discs; it should be pointed out that each of them must be calibrated to act at a different pressure, with the means that enable each one to operate as required.

The evident solution to the problem that currently exists in this area would be to have a single rupture disc which, according to the variation in pressure, ruptures at a different rupture point, through the mere fact of having different orifice geometries on the disc's supports, said orifices serving to evacuate the fluid contained in the vessel.

However, the applicant is not aware of the existence at this time of an invention that has the characteristics described in these specifications.

### DESCRIPTION OF THE INVENTION

The safety device using a rupture disc with multiple pressure settings proposed by the invention is in and of itself an evident innovation that may be used in containers or tanks that need an operating pressure for their safety element under storage or idle conditions, and in which this operating pressure varies when there is some type of stress; or else in containers or tanks where the fluid contained within changes or is mixed in different concentrations, in such a way that the properties of the final mix vary. It should also be pointed out that it may also be used for containers or tanks exposed to temperatures that fluctuate greatly.

More specifically, the safety device using a rupture disc with multiple pressure settings that is the object of the invention is made up of a container subjected to a pressure that may present variable allowable overpressures, determined by modifying over time some of the parameters involved, such as the type of fluid contained in it, operating temperature, the container's level of fullness, its volume and mechanical properties.

Specifically, the operating principle of the safety device using a rupture disc with multiple pressure settings consists of the fact that the pressure of the container causes stresses on the material that makes up the rupture disc, producing a progressive deformation in the form of an outward bulge, in such a way that as soon as the tensile strength of the material of which the rupture disc is made is exceeded, the actual rupture of the disc occurs, releasing the fluid contained in the vessel.

For example, for the particular application of this device incorporated into a container of helium whose function is to fill a car airbag, the operating procedure consists of having a cylinder in a state of stable pressurization at a certain pressure level, with the rupture disc being supported on a hold-down device that has a gas outlet with a certain diameter, and which is totally hermetic.

If the internal pressure of said cylinder rises to a pressure level greater than the aforementioned one, as might happen through the effects of ambient temperature, the rupture disc that is supported on the hold-down device that was described earlier reaches the tensile strength limit and ruptures, allowing the gas to escape through the orifice with the smaller diameter.

However, if the cylinder is in a state of stable pressurization at a certain pressure level, and the actuator causes the hold-down device to be released and it no longer serves as support for the rupture disc, the latter would rest on the complementary ring, which has a gas outlet diameter greater than the aforementioned one. The disk is welded to this ring, and to a calibrating ring; and in this situation, the rupture disc reaches the tensile strength limit and ruptures, allowing the gas to escape through the orifice with the larger diameter.

In summary, the invention presents the possibility of using two different pressures at which the single rupture disc of the invention ruptures, releasing the internal pressure, depending on the different diameters of the supporting part.

### DESCRIPTION OF THE DRAWINGS

To complement this description and for the purpose of allowing for better understanding of the characteristics of the invention, a plan sheet of an illustrative and non-restrictive nature, in which the following items are represented, is attached as an integral part of these specifications:

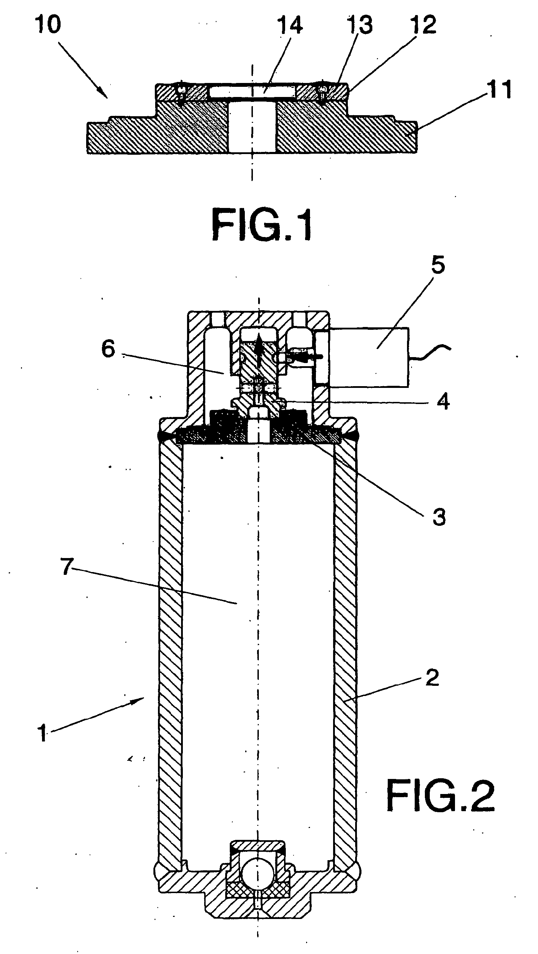

Figure 1 - Corresponds to a side elevation view, duly cross-sectioned, of the object of the invention at its maximum dimensions, in other words, in a position in which the safety device using a rupture disc with multiple pressure settings has a different diameter than the one represented in figure 1, i.e., larger.
Figure 2 - Corresponds to a cross-section view of the invention represented in a summarized form in figure 1.

### PREFERRED EMBODIMENT OF THE INVENTION

In accordance with the foregoing description, the safety device using a rupture disc with multiple pressure settings (1), which is made up of a cylinder or container (2) in a state of stable pressurization, referenced by (6), incorporating a pressurized chamber (7) and the hold-down device (4) supporting the rupture disk which has a gas outlet diameter (6) and is totally hermetic, has the unusual feature that if the internal pressure of the cylinder (2) rises to the higher pressure level through the effect of the ambient temperature, the rupture disc on which the hold-down device (4) is supported reaches the tensile strength limit and ruptures, allowing the gas to escape through the orifice with the diameter indicated by (6).

However, if the cylinder (2) is in a state of stable pressurization at the respective pressure, and the actuator (6) causes the hold-down device (4) to be released so that it no longer serves as support to the rupture disc (12), the latter will rest on the ring element (13), which has a gas outlet diameter that is appreciably larger than (6). The disc is welded to this ring and to a calibrated ring referenced by (11).

In this situation, the rupture disc (12) of the element with the larger diameter (10), reaches the limit of its tensile strength and ruptures, allowing the gas to escape through the orifice with the larger diameter (14).

Consequently, the invention has two pressures (6) and (14) at which the single rupture disc (12) ruptures and releases the internal pressure, depending on the different orifice diameters (6) and (14) of the supporting part.

## Claims

1. Safety device using a rupture disc with multiple pressure settings, of the type intended for use in containers or tanks, including for use in filling a car airbag, **characterized in that** it is made up of a metal body (2) in the form of a cylinder or vessel that is in a state of stable pressurization, with a rupture disc (12) that is supported on the hold-down device (4), which has a gas outlet diameter (6) and is totally hermetic, incorporating a ring (13) that is welded to the rupture disc (7), as well as a complementary outlet orifice (14).
